# EUROPEAN PATENT APPLICATION

(11) **EP 4 825 659 A1**
(43) Date of publication of application: **21.10.2026**
(21) Application number: 26171732.6
(22) Date of filing: 10.04.2026
(51) Int. Cl.: B60N 3/10, F25D 17/06, F25D 17/08

(54) **IN-VEHICLE REFRIGERATOR**

(30) Priority: 17.04.2025 CN 202520739577 U
(71) Applicant: Shenzhen Anker Solix Technology Co., Ltd., Shenzhen City, Guangdong (CN)
(72) Inventor: HAN, Cong, Shenzhen (CN); OU, Qizhen, Shenzhen (CN); PENG, Jinling, Shenzhen (CN)
(74) Representative: Steffens, Adrian

(57) **Abstract**

In-vehicle refrigerator including: a refrigerator body provided with a refrigeration cavity (101) and a first accommodating cavity (102) which are arranged separately; a first evaporator disposed in the first accommodating cavity; a first fan (313) disposed in the first accommodating cavity and including a first air inlet (301) and a first air outlet (302), the first air outlet communicating with the refrigeration cavity; and an air flue assembly disposed in the first accommodating cavity and including a pipe (41) extending from the first air inlet (301) to the refrigeration cavity, a first end of the pipe communicating with the refrigeration cavity, and a second end of the pipe communicating with the first air inlet. Due to forced convection heat exchange between air near the wall surface (311, 324) of the refrigerator body and air in the center of the refrigeration cavity, cold energy on the wall surface of the refrigerator body can be conducted to the center of the refrigeration cavity more quickly.

## Description

### Field

The present disclosure relates to the technical field of in-vehicle refrigerators, in particular to an in-vehicle refrigerator.

### Background

Most in-vehicle refrigerators in the related art are direct-cooling. An evaporator used in the direct-cooling in-vehicle refrigerator is directly mounted and fixed on an inner wall of a refrigerator body, which causes a refrigerating speed near a wall surface of the refrigerator body to be much higher than that at a central position of an internal space of the refrigerator body, resulting in uneven refrigeration inside the in-vehicle refrigerator. At the same time, since a heat exchange method of the direct-cooling refrigerator is natural convection heat exchange, the heat exchange efficiency is low, resulting in a low refrigerating speed.

### Summary

The present disclosure provides an in-vehicle refrigerator according to claim 1 to solve the technical problem that since the natural convection heat exchange of the direct-cooling in-vehicle refrigerator in the related art has low heat exchange efficiency, a refrigerating speed near a wall surface of the refrigerator body is much higher than that at a central position of an internal space of the refrigerator body, resulting in a low refrigerating speed and uneven refrigeration. The dependent claims refer to further embodiments.

In a first aspect, the disclosure provides an in-vehicle refrigerator according to claim 1.

Further, the disclosure may provide an in-vehicle refrigerator including:
a refrigerator body provided with a refrigeration cavity and a first accommodating cavity which preferably are arranged separately;
a first evaporator disposed in the first accommodating cavity and configured to form cold air in the refrigeration cavity and/or configured to exchange heat with a wall surface of the refrigerator body to form cold air in the refrigeration cavity and/or configured to provide cooling so as to form cold air in the refrigeration cavity;
a first fan disposed in the first accommodating cavity and including a first air inlet and a first air outlet, the first air outlet communicating with the refrigeration cavity; and
an air flue assembly disposed in the first accommodating cavity and including an air passage, in particular a pipe, extending from the first air inlet to the refrigeration cavity, a first end of the pipe communicating with the refrigeration cavity, and a second end of the pipe communicating with the first air inlet,
wherein the first fan is configured to send an airflow, in particular high-speed airflow, into the refrigeration cavity, and drive the cold air in the refrigeration cavity to flow from the second end of the pipe to the first fan and then into the refrigeration cavity, thereby forming circulating airflow in the in-vehicle refrigerator.

In another example, an in-vehicle refrigerator is provided, comprising:
a refrigerator body provided with a refrigeration cavity and a first accommodating cavity which are arranged separately;
a first evaporator disposed in the first accommodating cavity and configured to exchange heat with a wall surface of the refrigerator body to form cold air in the refrigeration cavity;
a first fan disposed in the first accommodating cavity and including a first air inlet and a first air outlet, the first air outlet communicating with the refrigeration cavity; and
an air flue assembly disposed in the first accommodating cavity and including a pipe extending from the first air inlet to the refrigeration cavity, a first end of the pipe communicating with the refrigeration cavity, and a second end of the pipe communicating with the first air inlet,
wherein the first fan is configured to send high-speed airflow into the refrigeration cavity, and drive the cold air in the refrigeration cavity to flow from the second end of the pipe to the first fan and then into the refrigeration cavity, thereby forming circulating airflow in the in-vehicle refrigerator.

In a possible implementation mode, the first end of the air passage is provided with a first vent, the refrigerator body is provided with a second air inlet communicating with the refrigeration cavity, and the first vent communicates with the second air inlet correspondingly. The air passage may be a pipe.

In a possible implementation mode, the first fan includes a housing and an impeller, the impeller is disposed inside the housing, the housing is provided with the first air inlet, the second end of the air passage is provided with a second vent, and the second vent communicates with the first air inlet correspondingly.

In a possible implementation mode, the housing is provided with the first air outlet, the refrigerator body is provided with a second air outlet communicating with the refrigeration cavity, and the second air outlet communicates with the first air outlet correspondingly.

In a possible implementation mode, the second air inlet and the second air outlet are arranged opposite each other, preferably in a horizontal direction.

In a possible implementation mode, the housing is provided with a first recess. Preferably, the second end of the air passage, in particular the pipe, is embedded in the first recess and/or the first air inlet is provided at the first recess.

In a possible implementation mode, the impeller is provided with a first wall surface on a side thereof close to the housing, and the housing is provided with a second wall surface on a side thereof close to the impeller; there is a spacing between the first wall surface and the second wall surface. Preferably, a value of the spacing ranges from 0.5 mm to 3.5 mm.

In a possible implementation mode, the first wall surface is provided with a third air inlet, the first air inlet is provided on the second wall surface and communicates with the third air inlet correspondingly. Preferably, a circumferential side of the impeller is provided with a plurality of third air outlets, and the plurality of third air outlets are evenly arranged in a circumferential direction of the impeller and communicate with the first air outlet correspondingly.

In a possible implementation mode, the housing is provided with a baffle, and an orthographic projection of the baffle on a vertical plane partially overlaps an orthographic projection of the impeller on a vertical plane.

In a possible implementation mode, a plurality of first air outlets and a plurality of second air outlets are provided in one-to-one correspondence.

In a possible implementation mode, the air flue assembly further includes a first ventilation grid disposed at the first vent and/or the first air outlet of the housing is provided with a second ventilation grid.

In a possible implementation mode, the air flue assembly further includes a second evaporator disposed within the air passage, in particular the pipe, preferably so that when the first fan is in operation, the airflow within the air passage, in particular the pipe, exchanges heat with the second evaporator.

In a possible implementation mode, a thermal insulation layer is provided inside the first accommodating cavity and/or is arranged around the refrigeration cavity.

The above technical solutions provided by examples of the disclosure have following advantages as compared with the related art.

In the in-vehicle refrigerator provided by examples of the disclosure, when the first fan operates, stable and high-pressure high-speed airflow is generated. The high-speed airflow enters the refrigeration cavity from the first air outlet of the first fan, driving the cold air in the refrigeration cavity to flow from the second end of the pipe of the air flue assembly to the first fan and then into the refrigeration cavity, thereby forming circulating airflow in the in-vehicle refrigerator. During a circulation process of the airflow, a thermal load exchanges heat with the cold air and is cooled. At the same time, heat conduction occurs between the first evaporator and the wall surface of the refrigerator body. Cold energy of the first evaporator transfers to the wall surface of the refrigerator body. Due to forced convection heat exchange between air near the wall surface of the refrigerator body and air in the center of the refrigeration cavity, cold energy on the wall surface of the refrigerator body can be conducted to the center of the refrigeration cavity more quickly, so that a temperature in the center of the refrigeration cavity drops rapidly. Accordingly, uniformity of temperature in the refrigeration cavity of the refrigerator is improved, the refrigerating speed is increased, and the heat exchange efficiency is improved.

### Brief Description of the Drawings

Accompanying drawings, which are incorporated in and constitute a part of this specification, illustrate examples according to the disclosure, which together with the specification serve to explain principles of the disclosure.

In order to more clearly illustrate technical solutions in examples of the present disclosure or in the related art, drawings that need to be used in description of the examples or the related art are briefly introduced below. Apparently, the drawings in the following description are merely some examples of the disclosure, and other drawings can be obtained in accordance with these drawings without inventive work for those skilled in the art.

One or more examples are illustrated by figures in the corresponding drawings, which does not constitute a limitation of the examples. Elements with the same reference numerals in the drawings represent similar elements, and the drawings do not constitute scale limitation unless otherwise specified.
- FIG. 1: is a structure diagram of an in-vehicle refrigerator according to an example of the present disclosure;
- FIG. 2: is a front view of the in-vehicle refrigerator shown in FIG. 1;
- FIG. 3: is a cross-sectional view taken along an A-A direction in FIG. 2;
- FIG. 4: is a schematic diagram of an operating state of the in-vehicle refrigerator shown in FIG. 1, in which a cover is not shown and arrows indicate a flow direction of airflow;
- FIG. 5: is an enlarged diagram of a part B in FIG. 4;
- FIG. 6: is a structure diagram of an air flue assembly of the in-vehicle refrigerator shown in FIG. 1;
- FIG. 7: is a diagram of assembling the air flue assembly and a first fan of the in-vehicle refrigerator shown in FIG. 1;
- FIG. 8: is a structure diagram of a housing of the first fan shown in FIG. 7;
- FIG. 9: is a structure diagram of an impeller of the first fan shown in FIG. 7;
- FIG. 10: is a structure diagram of a body of the in-vehicle refrigerator shown in FIG. 1; and
- FIG. 11: is a perspective cross-sectional view of the in-vehicle refrigerator shown in FIG. 1.

### Description of reference numerals:

1: refrigerator body; 11: inner board; 12: outer board; 101: refrigeration cavity; 102: first accommodating cavity; 103: second air inlet; 104: second air outlet; 105: second accommodating cavity; 2: first evaporator; 3: first fan; 31: impeller; 311: first wall surface; 312: third air inlet; 313: third air outlet; 32: housing; 321: first recess; 322: baffle; 323: second ventilation grid; 324: second wall surface; 301: first air inlet; 302: first air outlet; 4: air flue assembly; 41: air passage / pipe; 411: first vent; 412: second vent; 42: first ventilation grid; 43: second evaporator; 5: cover.

### Detailed Description

In order to make objects, technical solutions, and advantages of examples of the disclosure clearer, the technical solutions in the examples of the disclosure will be clearly and fully described in combination with the accompanying drawings in the examples of the present disclosure. Obviously, the examples to be described are part of examples but not all examples of the disclosure. Based on the examples of the disclosure, all other examples obtained by those of ordinary skill in the art without inventive work shall fall within the scope of the disclosure.

Many different examples are disclosed below to realize different structures of the disclosure.

In order to simplify the disclosure, components and arrangements of specific examples are described below. Of course, they are only exemplary and are not intended to limit the disclosure. Furthermore, the present disclosure may repeat reference numerals and/or letters in different examples. The repetition is for simplicity and clarity, and in itself does not indicate the relationship between the various examples and/or arrangements discussed.

For the convenience of description, spatial relative relationship terms can be used herein to describe the relative positional relationship or movement status of one element or feature relative to another element or feature as shown in the drawings, such as "inside", "outside", "inner", "outer", "under", "below", "on", "above", "front" and "back". Such spatial relative relationship terms are intended to include different orientations of the device in use or operation other than orientations depicted in the drawings. For example, if the device in the drawings has a position turnover, a posture change or a movement status change, these directional indications will change accordingly, for example: elements described as "under or below other elements or features" will be subsequently oriented as "on or over other elements or features". Thus, the exemplary term "below" may include both orientations of above and below. The device may be otherwise oriented (rotated by 90 degrees or in other directions), and the spatial relative relationship description used herein are interpreted accordingly.

In order to solve the technical problem that since the natural convection heat exchange of the direct-cooling in-vehicle refrigerator in the related art has low heat exchange efficiency, a refrigerating speed near a wall surface of the refrigerator body is much higher than that at a central position of an internal space of the refrigerator body, resulting in a low refrigerating speed and uneven refrigeration, the present disclosure provides an in-vehicle refrigerator. Due to forced convection heat exchange between air near the wall surface of the refrigerator body and air in the center of the refrigeration cavity, cold energy on the wall surface of the refrigerator body can be conducted to the center of the refrigeration cavity more quickly, so that a temperature in the center of the refrigeration cavity drops rapidly. Accordingly, uniformity of temperature in the refrigeration cavity of the refrigerator is improved, the refrigerating speed is increased, and the heat exchange efficiency is improved.

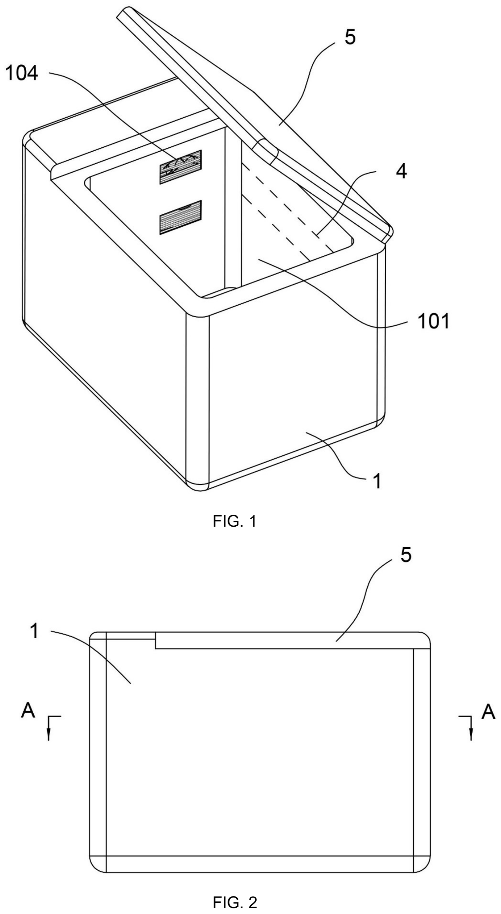

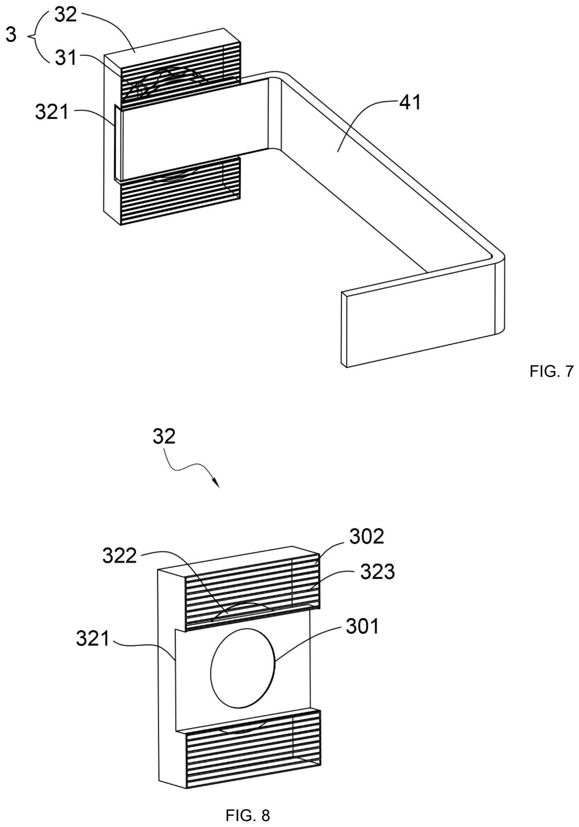

FIGS. 1 to 3 show an in-vehicle refrigerator provided by the present disclosure. The in-vehicle refrigerator includes a refrigerator body 1, a first evaporator 2, a first fan 3, and an air flue assembly 4. The refrigerator body 1 is provided with a refrigeration cavity 101 and a first accommodating cavity 102 which are arranged separately. The refrigeration cavity 101 is configured to hold thermal loads such as food and beverages. The first evaporator 2 is disposed in the first accommodating cavity 102, and exchanges heat with a wall surface of the refrigerator body 1 to form cold air in the refrigeration cavity 101. The first fan 3 is disposed in the first accommodating cavity 102, and includes a first air inlet 301 and a first air outlet 302 (see FIG. 8). The first air outlet 302 of the first fan 3 communicates with the refrigeration cavity 101. The air flue assembly 4 is disposed in the first accommodating cavity 102, and includes an air passage, in particular a pipe 41, extending from the first air inlet 301 to the refrigeration cavity 101. A first end of the pipe 41 communicates with the refrigeration cavity 101, and a second end of the pipe 41 communicates with the first air inlet 301 of the first fan 3. The first fan 3 is configured to send high-speed airflow into the refrigeration cavity 101, and drive the cold air in the refrigeration cavity 101 to flow from the second end of the pipe 41 to the first fan 3 and then into the refrigeration cavity 101, thereby forming circulating airflow in the in-vehicle refrigerator.

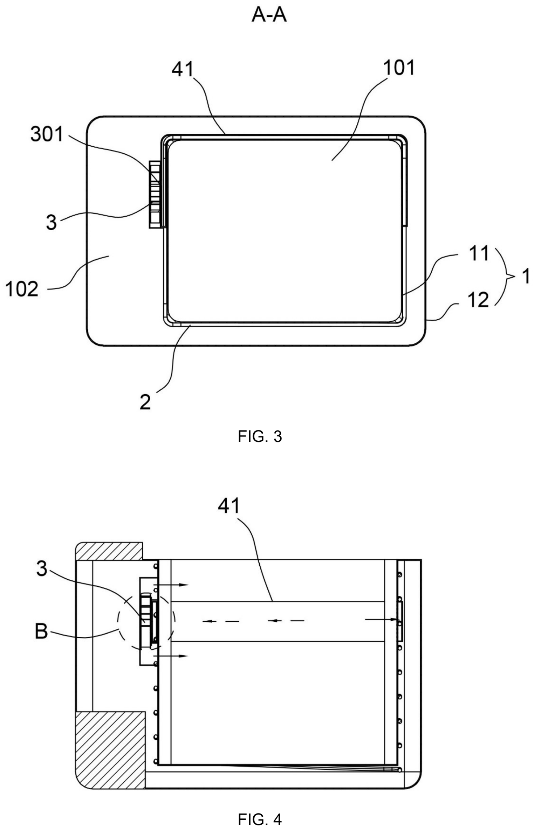

Understandably, as shown in FIG. 4, when the first fan 3 operates, stable and high-pressure high-speed airflow is generated. The high-speed airflow enters the refrigeration cavity 101 from the first air outlet 302 of the first fan 3, driving the cold air in the refrigeration cavity 101 to flow from the second end of the pipe 41 of the air flue assembly 4 to the first fan 3 and then into the refrigeration cavity 101, thereby forming circulating airflow in the in-vehicle refrigerator. During a circulation process of the airflow, a thermal load exchanges heat with the cold air and is cooled. At the same time, heat conduction occurs between the first evaporator 2 and the wall surface of the refrigerator body 1. Cold energy of the first evaporator 2 transfers to the wall surface of the refrigerator body 1. Due to forced convection heat exchange between air near the wall surface of the refrigerator body 1 and air in the center of the refrigeration cavity 101, cold energy on the wall surface of the refrigerator body 1 can be conducted to the center of the refrigeration cavity 101 more quickly, so that a temperature in the center of the refrigeration cavity 101 drops rapidly. Accordingly, uniformity of temperature in the refrigeration cavity 101 of the refrigerator is improved, the refrigerating speed is increased, and the heat exchange efficiency is improved.

Of course, the in-vehicle refrigerator provided in this example may also operate when the first fan 3 is shut down. The first evaporator 2 and the wall surface of the refrigerator body 1 transfer the cold energy through heat conduction. This part of cold energy transfers to the refrigeration cavity 101 through natural convection, thereby lowering the temperature of the thermal load.

Furthermore, a thermal insulation layer is provided inside the first accommodating cavity 102 and is arranged around the refrigeration cavity 101. The thermal insulation layer acts as a barrier to heat conduction, preventing cold energy from leaking to the outside of the refrigerator body. Exemplarily, the thermal insulation layer may be solidified by filling a polyurethane prepolymer, a foaming agent, a catalyst, a chain extending and crosslinking agent, and the like, or may be formed by directly filling other thermal insulation materials.

Optionally, the first fan 3 is a centrifugal fan which can pressurize the air, increase the airflow speed, and improve the airflow circulation effect, thereby enhancing the heat exchange efficiency.

Exemplarily, the refrigerator body 1 includes an inner board 11 and an outer board 12. The outer board 12 is sleeved around a periphery of the inner board 11, and the first accommodating cavity 102 is formed between the inner board 11 and the outer board 12. The refrigerator body 1 may have a cylindrical shape or a square tube shape, which is not specifically limited in the present disclosure.

Specifically, the pipe 41 may have a square cross section. When the refrigerator body has a square tube shape, the pipe 41 may be extended along an outer wall surface of the inner board 11. In a preferred example, the pipe 41 may abuts against the inner board 11 on a side thereof facing the first accommodating cavity 102. In this case, the pipe 41 is disposed close to the refrigeration cavity 101, which can shorten a flow path of the circulating airflow and reduce a pressure loss of the circulating airflow, thereby avoiding reduction in the airflow speed. This allows the cold energy of the wall surface of the refrigerator body 1 to be conducted to the center of the refrigeration cavity 101 more quickly, and the temperature of the center of the refrigeration cavity 101 drops rapidly, thereby improving the uniformity of temperature inside the refrigerator, increasing the refrigerating speed, and improving the heat exchange efficiency. In another example, the pipe 41 may also be disposed in the middle of the first accommodating cavity 102.

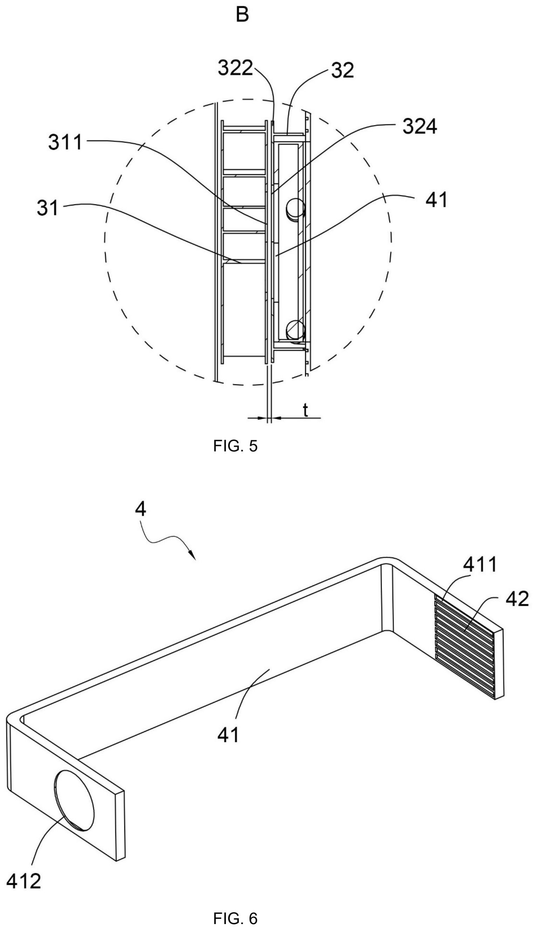

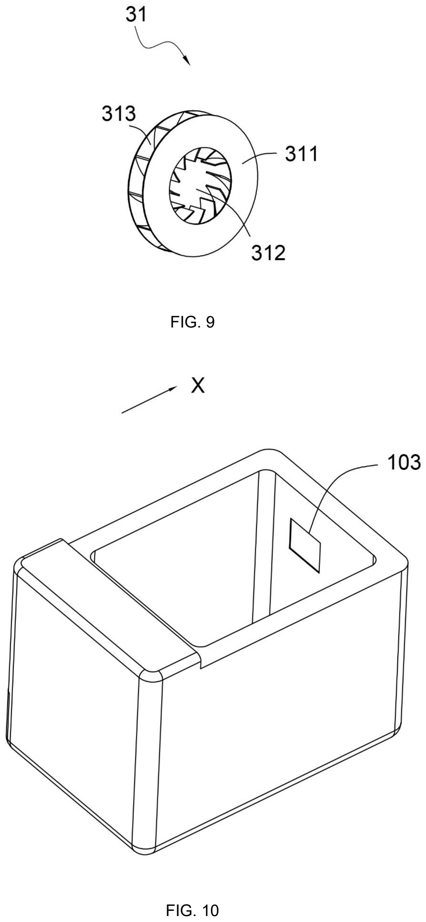

In an example, as shown in FIGS. 6 and 10, the first end of the pipe 41 is provided with a first vent 411, and the refrigerator body 1 is provided with a second air inlet 103 communicating with the refrigeration cavity 101. The first vent 411 of the pipe 41 communicates with the second air inlet 103 of the refrigerator body 1correspondingly. As shown in FIGS. 7 and 8, the first fan 3 includes a housing 32 and an impeller 31. The impeller 31 is disposed inside the housing 32, and the housing 32 is provided with the first air inlet 301. The second end of the pipe 41 is provided with a second vent 412, and the second vent 412 of the pipe 41 communicates with the first air inlet 301 correspondingly. The housing 32 is provided with the first air outlet 302, and the refrigerator body 1 is provided with a second air outlet 104 communicating with the refrigeration cavity 101 (shown in FIG. 1). The second air outlet 104 of the refrigerator body 1 communicates with the first air outlet 302 correspondingly. Understandably, when the impeller 31 of the first fan 3 rotates, external air flows axially into the housing 32, pressurizes air inside the housing 32 of the first fan 3, and generates a stable and high-pressure high-speed airflow. The high-speed airflow turns 90° and flows out radially and then enters the refrigeration cavity 101 from the first air outlet 302 of the first fan 3 and the second air outlet 104 of the refrigerator body 1. The high-speed airflow drives cold air in the refrigeration cavity 101 to enter the pipe 41 from the second air inlet 103 of the refrigerator body 1 and the first vent 411 of the pipe 41 and then enters the first air inlet 301 of the first fan 3 from the second vent 412 of the pipe 41. Under a centrifugal force of the impeller 31, high-speed airflow is formed, thereby forming circulating airflow. During a circulation process of the airflow, a thermal load exchanges heat with the cold air and is cooled. At the same time, heat conduction occurs between the first evaporator 2 and the wall surface of the refrigerator body 1. Cold energy of the first evaporator 2 transfers to the wall surface of the refrigerator body 1. Due to forced convection heat exchange between air near the wall surface of the refrigerator body 1 and air in the center of the refrigeration cavity 101, cold energy on the wall surface of the refrigerator body 1 can be conducted to the center of the refrigeration cavity 101 more quickly, so that a temperature in the center of the refrigeration cavity 101 drops rapidly. Accordingly, uniformity of temperature in the refrigeration cavity 101 of the refrigerator is improved, the refrigerating speed is increased, and the heat exchange efficiency is improved.

The first vent 411 of the air flue assembly 4 is connected to the second air inlet 103 of the refrigerator body 1 correspondingly. Specifically, an orthographic projection of the first vent 411 of the air flue assembly 4 onto a vertical plane may be set coincident with an orthographic projection of the first air inlet 301 of the housing 32 onto the vertical plane. With this configuration, the airflow in the air flue assembly 4 may pass through the first air inlet 301 more smoothly, improving the airflow circulation efficiency and increasing the refrigerating speed of the refrigeration cavity 101.

It should be noted that the first vent 411 may have a circular shape, a rectangular shape, or another shape, which is not limited in the present disclosure. In an example, the first vent 411 has a circular shape, and the second air inlet 103 has a circular shape accordingly, so that the cold air in the refrigeration cavity 101 can better pass through the first vent 411 from the second air inlet 103. In another example, as shown in FIG. 6, the first vent 411 has a rectangular shape, and the second air inlet 103 has a rectangular shape accordingly. The second vent 412 may have a circular shape, a rectangular shape, or another shape, which is not limited in the present disclosure. In a preferred example, the first fan 3 may be a centrifugal fan. The first air inlet 301 of the centrifugal fan has a circular shape, and the second vent 412 has a circular shape accordingly.

In an example, the second air inlet 103 and the second air outlet 104 of the refrigerator body 1 are arranged opposite each other in a horizontal direction. For ease of explanation and understanding, as shown in FIG. 10, the horizontal direction may be an X direction shown in the drawing. For example, when the refrigerator body 1 has a square tube shape, the second air inlet 103 and the second air outlet 104 are provided on opposite sides of the refrigerator body 1, respectively. The second air inlet 103 and the second air outlet 104 are arranged opposite each other, which can enhance convection in the refrigeration cavity 101. Accordingly, the cold air in the refrigeration cavity 101 can circulate faster, so that the temperature of the refrigeration cavity 101 tends to be uniform more quickly.

Of course, the second air inlet 103 and the second air outlet 104 may also be provided on two adjacent sides of the refrigerator body 1, respectively.

In an example, as shown in FIGS. 7 and 8, the housing 32 is provided with a first recess 321, the second end of the pipe 41 is embedded in the first recess 321, and the first air inlet 301 is provided at the first recess 321, so that a vertical plane where the first air inlet 301 is located is not the same as a vertical plane where the first air outlet 302 is located. With this configuration, the housing 32 is provided with the first recess 321, and the second end of the pipe 41 is embedded in the first recess 321, which can improve stability of assembly of the pipe 41 and improve aesthetics of the inner wall surface of the refrigerator body 1. If the housing 32 is not provided with the first recess 321, a recess for mounting the pipe 41 needs to be provided in the inner board. With this design, the refrigeration cavity 101 has a protrusion, which is not only unaesthetic, but will also interfere with the user's access to food, beverages and other items.

As shown in FIG. 5, the second end of the pipe 41 is embedded in the first recess 321. Specifically, the second end of the pipe 41 tightly abuts against the first recess 321.

In an example, as shown in FIG. 5, the impeller 31 is provided with a first wall surface 311 on a side thereof close to the housing 32, and the housing 32 is provided with a second wall surface 324 on a side thereof close to the impeller 31. There is a spacing t between the first wall surface 311 and the second wall surface 324, and a value of the spacing t ranges from 0.5 mm to 3.5 mm. In this example, as shown in FIG. 9, the first wall surface 311 of the impeller 31 is provided with a third air inlet 312. The first air inlet 301 is provided on the second wall surface 324 and communicates with the third air inlet 312 correspondingly. A circumferential side of the impeller 31 is provided with a plurality of third air outlets 313, and the plurality of third air outlets 313 are evenly arranged in a circumferential direction of the impeller 31 and communicate with the first air outlet 302 correspondingly. With this design, the external air flows axially from the first air inlet 301 of the housing 32 into the third air inlet 312 of the impeller 31. After being pressurized by the impeller 31, this part of air forms stable and high-pressure high-speed airflow. The high-speed airflow flows out from the third air outlet 313 of the impeller 31, passes through the second air outlet 104 of the refrigerator body 1 from the first air outlet 302 of the housing 32, and enters the refrigeration cavity 101.

It should be noted that the larger the spacing, the greater the possibility that the air discharged from the third air outlet 313 is sucked into the third air inlet 312; while the smaller the spacing, the greater the possibility that the impeller 31 and the housing 32 interfere with each other during installation. Therefore, on the one hand, in order to avoid collision between the impeller 31 and the housing 32 during installation, the spacing cannot be too small; on the other hand, in order to reduce the possibility that the air discharged from the third air outlet 313 is sucked into the third air inlet 312, the spacing cannot be too large. Specifically, the spacing may be set to 1 mm, 1.5 mm, 2 mm, 2.5 mm, 3 mm, or the like.

In an example, as shown in FIG. 8, the housing 32 is provided with a baffle 322. The baffle 322 may be disposed parallel to the vertical plane, and an orthographic projection of the baffle 322 on the vertical plane partially overlaps an orthographic projection of the impeller 31 on the vertical plane. The baffle 322 can block a side of the first fan 3, thereby reducing the possibility that the air discharged from the third air outlet 313 is sucked back by the third air inlet 312.

Furthermore, as shown in FIG. 5, the baffle 322 includes a third wall surface which is located on a side of the baffle 322 facing the first fan 3. The third wall surface is flush with the second wall surface 324, that is, there is the spacing t between the third wall surface and the first wall surface. A value range of t refers to the above example, which will not be repeated here.

It should be noted that the baffle 322 may have a fan shape, a rectangular shape or another shape. Preferably, the baffle 322 has a fan shape.

A plurality of first air outlets 302 and a plurality of second air outlets 104 are provided in one-to-one correspondence. Exemplarily, as shown in FIG. 8, two first air outlets 302 are provided on both sides of the pipe 41, respectively. Two second air outlets 104 are provided in one-to-one correspondence with the two first air outlets 302. By providing two first air outlets 302 and two second air outlets 104, passage area of high-speed airflow can be increased, thereby increasing a volume of air entering the refrigeration cavity 101, enhancing convection efficiency, and increasing the refrigerating speed. Of course, three first air outlets 302 may be provided, and three second air outlets 104 may be provided accordingly. The first air outlet 302 may have an annular shape, and the second air outlet 104 may have an annular shape accordingly.

In some examples, as shown in FIG. 6, the air flue assembly 4 further includes a first ventilation grid 42 disposed at the first vent 411. The first ventilation grid 42 has a ventilation function and can prevent other foreign objects from entering the pipe 41 and causing blockage of the pipe 41. In some examples, as shown in FIG. 7, the first air outlet 302 of the housing 32 is provided with a second ventilation grid 323. The second ventilation grid 323 has a ventilation function and can prevent other foreign objects from entering the pipe 41 and causing blockage of the pipe 41 when the first fan 3 is shut down.

In the related art, frost forms on an inner wall surface of a refrigerator body of a direct-cooling in-vehicle refrigerator. When the refrigerator is shut down, the frost on the inner wall surface of the refrigerator body will melt into condensed water, which will affect the user experience.

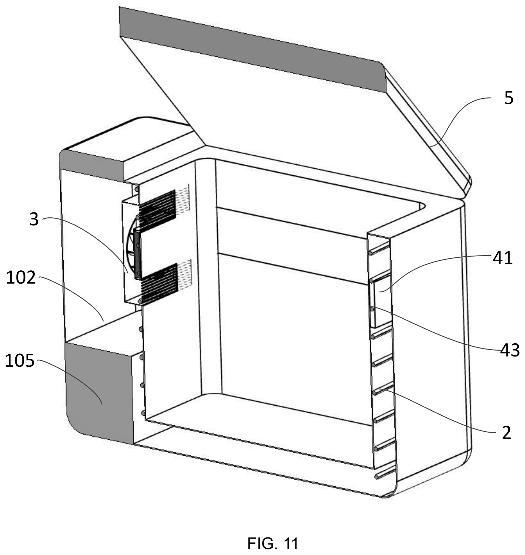

In an example, as shown in FIG. 11, the air flue assembly 4 further includes a second evaporator 43 disposed within the pipe 41, so that when the first fan 3 is in operation, the airflow within the pipe 41 exchanges heat with the second evaporator 43. Understandably, when the first fan 3 is operating, the circulating airflow in the pipe 41 may pass through a surface of the second evaporator 43, and the second evaporator 43 exchanges heat with the circulating airflow and sends cold energy of the second evaporator 43 to the refrigeration cavity 101 of refrigerator. The airflow passing through the surface of the second evaporator 43 can greatly enhance heat exchange capacity of the second evaporator 43 and improve the refrigerating capacity of the refrigerator. Meanwhile, moisture in the circulating airflow can condense on the surface of the second evaporator 43. Since the amount of water vapor in the refrigeration cavity 101 is constant, the amount of frost in the pipe 41 increases, and the amount of frost on the wall surface of the refrigerator body 1 decreases accordingly. As the airflow continues circulating, the moisture in the refrigeration cavity 101 decreases. Accordingly, the probability of frosting on the wall surface of the refrigerator body 1 decreases, that is, the probability of occurrence of condensed water in the refrigeration cavity 101 is reduced, greatly improving the user experience.

It should be noted that both the first evaporator 2 and the second evaporator 43 may be either coiled tube evaporators or roll-bond evaporators. The first evaporator 2 and the second evaporator 43 may be directly connected to form at least part of structure in a refrigeration cycle loop. Of course, the first evaporator 2 and the second evaporator 43 may also be provided as an integrated structure, that is, one part of a pipeline of the evaporator is disposed in the pipe 41 and the other part of the pipes is disposed outside the pipe 41.

Of course, the in-vehicle refrigerator provided in this example may also operate when the first fan 3 is shut down. The cold energy of the second evaporator 43 transfers to the pipe 41 and the wall surface of the refrigerator body 1 through heat conduction. This part of cold energy transfers to the refrigeration cavity 101 through natural convection, thereby reducing the temperature of the thermal load.

Furthermore, as shown in FIG. 1, the in-vehicle refrigerator also includes a cover 5 which is rotatably disposed on the top of the refrigerator body 1 to open or close the refrigeration cavity 101. The cover 5 may be provided with a sealing strip on a side facing the refrigeration cavity 101. When the cover 5 is closed on the top of the refrigerator body 1, the sealing strip can improve sealing performance and prevent cold air in the refrigeration cavity 101 from leaking to the outside of the refrigerator body 1.

A thermal insulation layer may also be provided inside the cover 5, which serves to block heat conduction and prevents cold energy from leaking to the outside of the refrigerator body 1.

In an example, as shown in FIG. 11, the in-vehicle refrigerator includes a compressor and a condenser. The refrigerator body is provided with a second accommodating cavity 105. The compressor and the condenser are disposed in the second accommodating cavity 105. The first accommodating cavity 102 and the second accommodating cavity 105 are arranged separately. The compressor, the condenser and the first evaporator 2 are connected to form at least part of structure in the refrigeration cycle loop. The in-vehicle refrigerator may also include a throttling device.

Specifically, an exhaust port of the compressor is connected to a refrigerant inlet of the condenser, and an air suction port the compressor is connected to a refrigerant outlet of the first evaporator 2. A refrigerant outlet of the condenser is connected to a refrigerant inlet of the throttling device, and a refrigerant outlet of the throttling device is connected to a refrigerant inlet of the first evaporator 2. The compressor, the condenser, the throttling device, and the first evaporator 2 form a refrigeration cycle loop. The compressor sucks a low-pressure refrigerant from the first evaporator 2, increases the pressure of the refrigerant from a low pressure to a high pressure, and makes the refrigerant continuously circulate in the refrigeration cycle loop. The refrigerant condenses into a refrigerant liquid having a relatively high pressure and a relatively high temperature in the condenser. The refrigerant liquid enters the throttling device. After being throttled by the throttling device, the refrigerant liquid is sent to the first evaporator 2. A low-temperature refrigerant in the first evaporator 2 exchanges heat with the wall surface of the refrigerator body 1, thereby cooling the refrigeration cavity 101. At the same time, the refrigerant absorbs heat and evaporates in the first evaporator 2 to become refrigerant vapor having a relatively low pressure, and the refrigerant vapor enters the air suction port of the compressor, achieving refrigerant circulation.

Optionally, the throttling device is configured to reduce the pressure of the high-pressure refrigerant liquid from the condenser to a low pressure to obtain a low-pressure refrigerant liquid, while regulate a flow rate of the refrigerant into the first evaporator 2. When the throttling device is adjusted to its maximum opening, the refrigerant in the refrigeration pipe is in its maximum flow rate. The throttling device may be, but is not limited to: capillary tubes, throttling short tubes, thermostatic expansion valves, electronic expansion valves, float valves, orifice plates, manual expansion valves, and the like.

Furthermore, the in-vehicle refrigerator may also include a second fan which is disposed in the second accommodating cavity 105 and configured to dissipate heat from the condenser. To facilitate heat dissipation, a heat dissipation vent may be provided on the refrigerator body 1 and the heat dissipation vent communicates with the second accommodating cavity 105.

It should be understood that the terms used herein are only for the purpose of describing specific exemplary examples and are not intended to be limiting. Unless the context clearly indicates otherwise, the singular forms "a", "an", and "the" as used herein can also mean including plural forms. The terms "include", "contain", "comprise", and "have" are inclusive and thus indicate the presence of features, steps, operations, elements and/or components described, but do not exclude the presence or addition of one or more other features, steps, operations, elements, components, and/or combinations thereof. The method steps, procedures, and operations described herein are not interpreted as necessarily requiring them to be executed in the specific order described, unless the execution order is explicitly indicated. It should also be understood that additional or alternative steps may be used.

Although a plurality of elements, components, regions, layers and/or sections can be described herein with the terms first, second, third, and the like, these elements, components, regions, layers and/or sections should not be limited by these terms. These terms may be only used to distinguish one element, component, region, layer or section from another ones. Terms such as "first" and "second" and other numerical terms do not imply sequence or order when used herein unless clearly indicated in the context. Accordingly, the first element, component, region, layer or section discussed below may be referred to as a second element, component, region, layer or section without departing from teachings of the exemplary examples.

The foregoing description is only the detailed description of the disclosure to enable a person skilled in the art to understand or implement the disclosure. Various modifications to these examples will be apparent to a person skilled in the art and general principles defined herein may be implemented in other examples without departing from the scope of the disclosure. Thus, the disclosure is not limited to the examples described herein, but conforms to the widest scope consistent with the principles and novel characteristics applied herein.

## Claims

1. An in-vehicle refrigerator comprising:
- a refrigerator body provided with a refrigeration cavity (101) and a first accommodating cavity (102);
- a first evaporator disposed in the first accommodating cavity (102) and configured to form cold air in the refrigeration cavity (101);
- a first fan (3) disposed in the first accommodating cavity (102) and comprising a first air inlet (301) and a first air outlet (302), the first air outlet communicating with the refrigeration cavity (101); and
- an air flue assembly disposed in the first accommodating cavity (102) and comprising an air passage (41) extending from the first air inlet (301) to the refrigeration cavity (101), a first end of the pipe communicating with the refrigeration cavity (101), and a second end of the air passage (41) communicating with the first air inlet (301),
- wherein the first fan (3) is configured to send an airflow into the refrigeration cavity (101), and drive the cold air in the refrigeration cavity (101) to flow from the second end of the air passage (41) to the first fan (3) and then into the refrigeration cavity (101), thereby forming circulating airflow in the in-vehicle refrigerator.

2. The in-vehicle refrigerator of claim 1, wherein the first end of the air passage (41) is provided with a first vent (411), the refrigerator body is provided with a second air inlet communicating with the refrigeration cavity (101), and the first vent communicates with the second air inlet (103) correspondingly.

3. The in-vehicle refrigerator of claim 1 or 2, wherein:
- the first fan (3) comprises a housing (32) and an impeller (31), the impeller (31) is disposed inside the housing (32), the housing (32) is provided with the first air inlet (301), the second end of the air passage (41) is provided with a second vent (412), and the second vent communicates with the first air inlet (301) correspondingly.

4. The in-vehicle refrigerator of claims 2 and 3, wherein:
- the housing (32) is provided with the first air outlet (302), the refrigerator body is provided with a second air outlet communicating with the refrigeration cavity (101), and the second air outlet communicates with the first air outlet (302) correspondingly.

5. The in-vehicle refrigerator of claim 4, wherein the second air inlet (103) and the second air outlet (104) are arranged opposite each other in a horizontal direction.

6. The in-vehicle refrigerator of any one of claims 3 to 5, wherein the housing (32) is provided with a first recess (321), the second end of the air passage (41) is embedded in the first recess (321), and the first air inlet (301) is provided at the first recess (321).

7. The in-vehicle refrigerator of any one of claims 3 to 6, wherein the impeller (31) is provided with a first wall surface (311) on a side thereof close to the housing (32), and the housing (32) is provided with a second wall surface (324) on a side thereof close to the impeller (31); there is a spacing between the first wall surface (311) and the second wall surface (324).

8. The in-vehicle refrigerator of claim 7, wherein a value of the spacing ranges from 0.5 mm to 3.5 mm.

9. The in-vehicle refrigerator of claim 7 or 8, wherein the first wall surface (311) is provided with a third air inlet (312), the first air inlet (301) is provided on the second wall surface (324) and communicates with the third air inlet (312) correspondingly; a circumferential side of the impeller (31) is provided with a plurality of third air outlets (313), and the plurality of third air outlets (313) are evenly arranged in a circumferential direction of the impeller (31) and communicate with the first air outlet (302) correspondingly.

10. The in-vehicle refrigerator of any one of claims 3 to 9, wherein the housing (32) is provided with a baffle (322), and an orthographic projection of the baffle (322) on a vertical plane partially overlaps an orthographic projection of the impeller (31) on a vertical plane.

11. The in-vehicle refrigerator of any one of claims 2 to 10, wherein a plurality of first air outlets (302) and a plurality of second air outlets (104) are provided in one-to-one correspondence.

12. The in-vehicle refrigerator of any one of claims 2 to 11, wherein the air flue assembly further comprises a first ventilation grid (42) disposed at the first vent (411).

13. The in-vehicle refrigerator of any one of claims 3 to 12, wherein the first air outlet (302) of the housing (32) is provided with a second ventilation grid (323).

14. The in-vehicle refrigerator of any one of the preceding claims, wherein the air flue assembly further comprises a second evaporator (43) disposed within the air passage (41), so that when the first fan (3) is in operation, the airflow within the air passage (41) exchanges heat with the second evaporator (43).

15. The in-vehicle refrigerator of any one of the preceding claims, wherein a thermal insulation layer is provided inside the first accommodating cavity (102) and is arranged around the refrigeration cavity (101).
